# EUROPÄISCHE PATENTSCHRIFT

(11) **EP 2 952 614 B1**
(45) Veröffentlichungstag und Bekanntmachung des Hinweises auf die Patenterteilung: **27.06.2018**
(21) Anmeldenummer: 15155221.3
(22) Anmeldetag: 16.02.2015
(51) Int. Cl.: D03D 1/00, D03D 15/00, D03D 13/00, B60N 2/58

(54) **Textilgewebe und Sitzbezug sowie Fahrzeugsitz mit einem solchen**
Textile fabric and seat cover and vehicle seat equipped with same
Tissu textile et housse de siège et siège de véhicule en étant doté

(30) Priorität: 04.06.2014 DE 102014210634
(43) Veröffentlichungstag der Anmeldung: 09.12.2015
(73) Patentinhaber: Volkswagen Aktiengesellschaft, 38440 Wolfsburg (DE)
(72) Erfinder: Bornhorst, Dr. Christian, 38547 Calberlah (DE); Mensing, Olaf, 48619 Heek (DE); Deutmeyer, Christian, 46397 Bocholt (DE); Gildekötter, Elke, 38536 Meinersen (DE); Müller, Wolfram, 30449 Hannover (DE); Spors, Petra, 10243 Berlin (DE)

(56) Entgegenhaltungen:
- WO-A1-97/23364
- WO-A2-2009/068257
- DE-U1-202012 005 465
- US-A- 5 856 249

## Beschreibung

Die Erfindung betrifft ein Textilgewebe für die äußere Verkleidung von Fahrzeugsitzen umfassend einen Schuss- und einen Kettfaden, wobei der Schussfaden einen als lufttexturiertes Multifilament ausgebildeten Polyester umfasst und der Kettfaden als Polyester-basiertes Monofilament ausgebildet ist.

Es ist bekannt, dass die äußere Verkleidung von Fahrzeugsitzen mit Gewebestoff oder Leder darauf gerichtet ist, optisch ansprechend und zugleich möglichst langlebig und strapazierfähig zu sein. Besonders die Gewebestoffe haben sich hierbei als preiswerte Alternative mit besseren Alltagseigenschaften gegenüber natürlichem Leder erwiesen. Professionelle Nutzer von Fahrzeugen wie zum Beispiel Zusteller, beanspruchen einen Fahrzeugsitz etwa 350 mal pro Tag an 250 Tagen pro Jahr. Bei solchen außergewöhnlichen Beanspruchungen zeigen verfügbare Textilgewebe häufig bereits nach relativ kurzer Zeit Verschleißmängel wie haarigen Faserpelz und Pilling (Knötchenbildung) bis zum Aufreißen des Bezuges und Entstehen von Löchern im Bezug. Dabei können Besonderheiten der Bekleidung der Benutzer, beispielsweise berufsbedingte Klettverschlüsse, Metallschnellverschlüsse und Ähnliches, zu einer zusätzlichen Beanspruchung eines Bezugsstoffes führen.

WO 2009/068257 A2 stellt ein Textilgewebe auf Polyesterbasis vor, wobei der Kettfaden als Monofilament und der Schussfaden als Multifilament ausgebildet ist.

Der Erfindung liegt nun die Aufgabe zugrunde, die Eigenschaften bestehender Textilgewebe für Autositze weiter zu verbessern. Insbesondere soll ein Textilgewebe bereitgestellt werden, welches eine weiter erhöhte Bruchfestigkeit aufweist.

Diese Aufgabe wird durch ein Textilgewebe mit den Merkmalen des ersten unabhängigen Anspruchs gelöst. Somit betrifft die Erfindung ein Textilgewebe, weiterführend auch nur Gewebe genannt, für die äußere Verkleidung von Fahrzeugsitzen umfassend einen Schussfaden und einen Kettfaden, wobei einer der Fäden einen als lufttexturiertes Multifilament ausgebildeten Polyester umfasst und der andere Faden als Polyester-basiertes Monofilament ausgebildet ist. Erfindungsgemäß ist vorgesehen, dass der als Monofilament ausgebildete Faden einen Polyester-Anteil von mindestens 70% und maximal 100% sowie einen Durchmesser im Bereich von 0,1 bis 0,24 mm aufweist.

Die mechanischen Eigenschaften wie Abriebfestigkeit, Zugfestigkeit, Steifigkeit und Knickbeständigkeit des Textilgewebes sind neben der Webart besonders durch die Art und Zusammensetzung der Kett- und Schussfäden bestimmt. Es zeigte sich, dass Materialien auf Polyesterbasis (Polyesteranteil von mindestens 70 %) sowohl als Kettfaden (in der Kette des Gewebes) als auch als Schussfaden (im Schuss des Gewebes) für die Anforderungen einer oben beschriebenen Beanspruchung im Dauerbetrieb sehr gut geeignet sind. Die Strapazierfähigkeit des Gewebes steht zudem direkt mit einer Dicke des Gewebes in Zusammenhang. Die Dicke des Gewebes wiederum wird im Wesentlichen über die Dicke beziehungsweise den Durchmesser der Kett- und Schussfäden bestimmt.

Überraschend hat sich gezeigt, dass entgegen dieser Tendenz Textilgewebe mit dünneren Fäden eine bessere Biegefestigkeit zeigen als solche mit dickeren Fäden. Die Biegefestigkeit ist ein Wert für die Biegebeanspruchung in einem auf Biegung beanspruchten Faden, bei deren Überschreiten der Bruch des Fadens eintritt. Sie beschreibt den Widerstand des Fadens, welcher seiner Durchbiegung oder seinem Bruch entgegengesetzt wird.

Sind die Fäden zu dünn, so zeigt das Gewebe eine niedrigere Reißfestigkeit, welche der Zugkraft im Moment des Reißens entspricht. Ein erfindungsgemäßes Textilgewebe, welches als Monofilament ausgebildete Fäden mit einem Durchmesser im Bereich von 0,1 bis 0,24 mm aufweist, zeigt bei akzeptabler Reißfestigkeit eine besonders hohe Bruchfestigkeit.

Besonders bevorzugt ist ein erfindungsgemäßes Textilgewebe, welches als Monofilament ausgebildete Fäden mit einem Durchmesser im Bereich von 0,14 bis 0,2 mm, insbesondere 0,16 bis 0,18 mm, besonders bevorzugt von etwa 0,17 mm aufweist, da innerhalb dieser Abstufungen die Reißfestigkeit, im Wesentlichen unter Beibehaltung der Bruchfestigkeit, zunimmt.

In bevorzugter Ausführung der Erfindung ist vorgesehen, dass der als Multifilament ausgeführte Faden der Schussfaden ist. Somit liegt der Kettfaden in dieser Ausgestaltung der Erfindung als Monofilament vor, welches in einer der beschriebenen Ausführungsformen ausgestaltet ist. In bevorzugter Ausgestaltung der Erfindung ist vorgesehen, dass das Textilgewebe in einer Leinwandbindung gewebt ist. In Leinwandbindung gewebte Textilgewebe weisen die engste Verkreuzung von Kett- und Schussfäden auf, also die höchste Anzahl an Punkten pro Fläche, an denen sich Kett- und Schussfaden kreuzen. Das Muster eines solchen Gewebes erinnert an ein Schachbrett. Der Vorteil der Leinwandbindung liegt in ihrer hohen Verschiebefestigkeit, sowie hohen Festigkeit und Luftdurchlässigkeit des Gewebes. Innerhalb der Variationen der Leinwandbindung ist eine 1/1-Bindung bevorzugt.

Neben der Bindungsart werden die wesentlichen Eigenschaften eines Gewebes durch die Fadendichte beeinflusst. Die Anzahl der Fäden pro Zentimeter gibt die Dichte (auch Fadendichte genannt), eines Gewebes an. Je höher die Anzahl der einzelnen Fäden auf dieser Fläche ist, desto dichter ist das Gewebe. Bei höheren Fadendichten und somit einer höheren Anzahl von Kreuzungspunkten des Gewebes gewinnt das Gewebe neben einem optischen Glanz eine höhere Festigkeit, da jeder einzelne Faden auch seine eigene Höchstzugkraft in das Gewebe mit einbringt, sodass das Gewebe mit jedem zusätzlichen Faden mehr pro Fläche insgesamt stabiler wird. Die Anzahl der Kettfäden je Zentimeter wird als Ketteinstellung bezeichnet, während es sich bei der Anzahl an Schussfäden je Zentimeter um die Schusseinstellung handelt.

In einer bevorzugten Ausgestaltung der Erfindung ist vorgesehen, dass das Textilgewebe 25 bis 40 Kettfäden pro Zentimeter, vorzugsweise 30 bis 34 Kettfäden pro Zentimeter, insbesondere 32 Kettfäden pro Zentimeter aufweist.

In einer weiteren Ausgestaltung ist bevorzugt, dass das Textilgewebe 10 bis 15 Schussfäden pro Zentimeter, vorzugsweise 12 bis 14 Schussfäden je Zentimeter, insbesondere 13 Schussfäden je Zentimeter aufweist.

Mit Vorteil sind die bevorzugten Schuss- und Ketteinstellungen miteinander kombinierbar, da das erfindungsgemäße Textilgewebe mit diesen Einstellungen die beste Festigkeit zeigt.

Bei welcher Belastung ein Gewebe bricht, hängt ferner von der Bruchfestigkeit beziehungsweise von der Bruchdehnung der verwendeten Garne, also der Kett- und Schussfäden, ab. Vorzugsweise weist der als Monofilament ausgebildete Faden, insbesondere das Monofilament des Kettfadens eine Bruchdehnung von mehr als 45%, insbesondere von mehr als 60% auf.

Bevorzugt ist der Schussfaden des erfindungsgemäßen Textilgewebes als texturiertes Multifilament ausgeführt, dass heißt, mehrere Monofilamente sind zu einem Schussfaden zusammengenommen.

Texturierung bezeichnet den Vorgang, glatten Filamentgarnen eine Kräuselstruktur (Textur) zu verleihen. Ziel ist es dabei, den glatten Kunstfasern aus Polyamid, Polyester oder Polypropylen eine Charakteristik von Naturfasern wie Wolle oder Baumwolle zu verleihen. Durch die Texturierung werden insbesondere die Elastizität, das Volumen, die Feuchtigkeitsaufnahme, der Feuchtigkeitstransport, der Lufteinschluss und die Glanzminderung erhöht und damit verbessert. Je nach Einsatz und Herstellungsprozess werden in der Praxis verschiedene Texturierverfahren, zum Beispiel die Lufttexturierung angewendet. Bevorzugt ist der Schussfaden des erfindungsgemäßen Textilgewebes lufttexturiert. Die mittels einer Luftdüse (AirJet Düse) verwirbelten Garne weisen einen voluminösen Charakter auf. Durch einen Rücksprung der Fasern nach einer luft-mechanischen Verformung des Garns durch die Luftdüse entsteht eine Kräuselung, das heißt die Textur.

In besonderer Ausgestaltung der Erfindung ist vorgesehen, dass der als Multifilament ausgeführte Faden, insbesondere der Schussfaden aus 130 bis 160 Multifilamenten, insbesondere 144 Multifilamenten besteht. Ein derartiger Faden weist eine hohe Stabilität bei geringem Durchmesser auf. Die einzelnen zu einem Faden zusammengenommen Multifilamente sind lufttexturiert. Dabei sind die einzelnen Multifilamente vorzugsweise miteinander verdreht oder verflochten, um dem Schussfaden mehr Stabilität zu verleihen.

Ein weiterer Aspekt der Erfindung betrifft einen Sitzbezug, umfassend ein Textilgewebe in einer der bevorzugten Ausgestaltungen. Der erfindungsgemäße Sitzbezug zeichnet sich durch eine besonders strapazierfähige Oberfläche aus und ist zudem besonders bruchfest.

Der erfindungsgemäße Sitzbezug eignet sich daher insbesondere als Sitzbezug für einen Fahrzeugsitz. Somit betrifft die Erfindung weiterhin einen Fahrzeugsitz, welcher einen erfindungsgemäßen Sitzbezug aufweist. Dieser Fahrzeugsitz wird aufgrund seiner hohen Beständigkeit gegenüber Dauerbelastung bevorzugt in Fahrzeugen für den Liefer- und Auslieferverkehr, wie beispielsweise zur Paket-, Post- und Möbellieferung eingesetzt.

Weitere bevorzugte Ausgestaltungen der Erfindung ergeben sich aus den übrigen, in den Unteransprüchen genannten Merkmalen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in einem Ausführungsbeispiel erläutert.

In einer bevorzugten Ausführungsform ist ein Fahrzeugsitz eines Kleintransporters mit einem erfindungsgemäßen Sitzbezug bezogen. Der Sitzbezug ist überwiegend, aber zumindest im Bereich einer Sitzfläche aus einem erfindungsgemäßen Textilgewebe gefertigt. Das erfindungsgemäße Textilgewebe weist im Kettfaden ein Monofilament und im Schussfaden ein Multifilament auf.

Das Monofilament ist ein Kunstgarn auf der Basis von Polyester. Es umfasst in diesem Beispiel zu mindestens 70% bis maximal 100% Polyethylenterephthalat (PET), ein durch Polykondensation hergestellter thermoplastischer Kunststoff aus der Familie der Polyester. PET ist polar, dadurch sind starke zwischenmolekulare Kräfte vorhanden. Das Molekül ist zudem linear ohne Vernetzungen aufgebaut. Beides sind Voraussetzungen für teilkristalline Bereiche und Fasern. Durch diese Bereiche ergibt sich eine hohe Bruchfestigkeit und Formbeständigkeit. Ferner umfasst das Monofilament zu 0% bis 30% Polybutylenterephthalat (PBT), ein thermoplastischer Kunststoff. PBT gehört ebenfalls zu den Polyestern und hat ähnliche Eigenschaften wie PET. Aufgrund der im Vergleich zu PET erhöhten Elastizität führt eine Beimischung von PBT zum Material des Monofilaments zu einer erhöhten Dehnbarkeit des Monofilaments. Zudem kann das Material des Kettfadens weitere Zusätze, wie beispielsweise Titandioxid (TiO₂) aufweisen.

Das Monofilament hat in der bevorzugten Ausführungsform einen Durchmesser von 0,17 ± 0,03 mm. Die Feinheit des in diesem Ausführungsbeispiel verwendeten Kettfadens beträgt 310 dtex, sie kann je nach Ausgestaltung des Fadens im Bereich von 200 bis 400 dtex betragen. Aus der Zusammensetzung des Materials und der Dicke des Kettfadens ergibt sich eine Festigkeit im Bereich von 4 bis 15 N, eine feinheitsbezogene Höchstzugkraft im Bereich von 20 bis 42 cN/tex sowie eine Höchstzugkraftdehnung im Bereich von 28 bis 68%. Der Kettfaden in gewähltem Ausführungsbeispiel weist eine Festigkeit von 9,5 N, eine feinheitsbezogene Höchstzugkraft von 30,9 cN/tex, sowie eine Höchstzugkraftdehnung von 48,7 % auf.

Der Schussfaden besteht ebenfalls im Wesentlichen aus einem Polyester (beispielsweise Polyethylenterephthalat), liegt im Gegensatz zum Kettfaden jedoch als Multifilament vor. Hierzu sind 130 bis 160 Filamente zu einem Faden zusammengefasst und mittels Lufttexturierung (z.B. sogenannte Taslanisierung) texturiert. Der Schussfaden des erfindungsgemäßen Textilgewebes umfasst in der bevorzugten Ausführung 144 Filamente und liegt in einer Feinheit von 602 dtex vor. Je nach Zusammensetzung, Texturierung und insbesondere Filamentanzahl je Faden kann die Feinheit jedoch auch Werte im Bereich von 450 bis 650 dtex aufweisen. Aus der Zusammensetzung des Materials und der Anzahl der einzelnen Filamente des Schussfadens ergibt sich eine Festigkeit im Bereich von 10 bis 20 N, eine feinheitsbezogene Höchstzugkraft im Bereich von 15 bis 37 cN/tex sowie eine Höchstzugkraftdehnung im Bereich von 26 bis 66%. Der Schussfaden im gewählten Ausführungsbeispiel weist eine Festigkeit von 14 N, eine feinheitsbezogene Höchstzugkraft von 26 cN/tex, sowie eine Höchstzugkraftdehnung von 46% auf.

Bei der Verwebung der Kett- und Schussfäden miteinander kommen in Kettrichtung 25 bis 40 Kettfäden auf einen Zentimeter, in Schussrichtung 10 bis 15 Schussfäden auf einen Zentimeter. Die bevorzugte Ausführungsform weist, unter Berücksichtigung der üblichen Produktionstoleranzen, 34 Fäden/cm in Ketteinstellung und 12 Fäden/cm in Schusseinstellung auf.

Die Kett- und Schussfäden sind hierbei in einer 1/1-Leinwandbindung miteinander verwebt. Das heißt, jeder Kettfaden kommt abwechselnd einmal über und einmal unter einem Schussfaden zu liegen. Die entstehenden Knotenpunkte oder Verkreuzungen sind in Kett- und in Schussrichtung jeweils um eins versetzt angeordnet.

Das erfindungsgemäße Textilgewebe kann mit Vorteil auch um 90° gedreht gewebt sein, sodass Schussfaden und Kettfaden mit all den beschriebenen bevorzugten Ausgestaltungen einander gegenseitig ersetzen. Mit anderen Worten ist ebenfalls bevorzugt, dass der Kettfaden des Textilgewebes als Multifilament mit 130 bis 160 Filamenten ausgeführt ist und das Textilgewebe in Ketteinstellung 10 bis 15 Fäden/cm aufweist. Der Schussfaden hingegen ist in dieser Ausgestaltung als Monofilament ausgeführt und mit 25 bis 40 Fäden pro Zentimeter gegen den Kettfaden verwebt.

Ein weiterer Aspekt der Erfindung betrifft einen Sitzbezug, der ein erfindungsgemäßes Textilgewebe aufweist. Ferner betrifft die Erfindung einen Fahrzeugsitz für ein Kraftfahrzeug, der einen erfindungsgemäßen Sitzbezug aufweist. Vorzugsweise ist ein erfindungsgemäßer Fahrzeugsitz, zumindest teilweise und insbesondere im Bereich der Sitzfläche, mit einem erfindungsgemäßen Textilgewebe bezogen.

## Patentansprüche

1. Textilgewebe für die äußere Verkleidung von Fahrzeugsitzen, umfassend einen Schussfaden und einen Kettfaden, wobei einer der Fäden einen als lufttexturiertes Multifilament ausgebildeten Polyester umfasst und der andere Faden als Polyester-basiertes Monofilament ausgebildet ist, **dadurch gekennzeichnet, dass** der als Monofilament ausgebildete Faden einen Polyester-Anteil von mindestens 70% und maximal 100% sowie einen Durchmesser im Bereich von 0,1 bis 0,24 mm aufweist.

2. Textilgewebe nach Anspruch 1, **dadurch gekennzeichnet, dass** der als Monofilament ausgebildete Faden einen Durchmesser im Bereich von 0,14 bis 0,2 mm, insbesondere 0,16 bis 0,18 mm aufweist.

3. Textilgewebe nach einem der vorhergehenden Ansprüche, **dadurch gekennzeichnet, dass** der als Multifilament ausgebildete Faden der Schussfaden ist.

4. Textilgewebe nach einem der vorhergehenden Ansprüche, **dadurch gekennzeichnet, dass** das Textilgewebe in einer Leinwandbindung gewebt ist.

5. Textilgewebe nach einem der vorhergehenden Ansprüche, **dadurch gekennzeichnet, dass** das Textilgewebe 25 bis 40 Kettfäden pro Zentimeter aufweist.

6. Textilgewebe nach einem der vorhergehenden Ansprüche, **dadurch gekennzeichnet, dass** der als Monofilament ausgebildete Faden eine Bruchdehnung von mehr als 45% aufweist.

7. Textilgewebe nach einem der vorhergehenden Ansprüche, **dadurch gekennzeichnet, dass** der als Multifilament ausgebildete Faden 130 bis 160 Filamente aufweist.

8. Textilgewebe nach einem der vorhergehenden Ansprüche, **dadurch gekennzeichnet, dass** das Textilgewebe 10 bis 15 Schussfäden pro Zentimeter aufweist.

9. Sitzbezug, umfassend ein Textilgewebe nach einem der vorhergehenden Ansprüche.

10. Fahrzeugsitz, der einen Sitzbezug nach Anspruch 9 aufweist.

## Claims

1. Woven textile fabric for the external trim of vehicle seats, comprising a weft thread and a warp thread, wherein one of the threads comprises a polyester that is configured as an air-texturized multifilament, and the other thread is configured as a polyester-based monofilament, **characterized in that** the thread that is configured as the monofilament has a proportion of polyester of at least 70% and at most 100%, and a diameter in the range from 0.1 to 0.24 mm.

2. Woven textile fabric according to Claim 1, **characterized in that** the thread that is configured as the monofilament has a diameter in the range from 0.14 to 0.2 mm, in particular 0.16 to 0.18 mm.

3. Woven textile fabric according to one of the preceding claims, **characterized in that** the thread that is configured as the multifilament is the weft thread.

4. Woven textile fabric according to one of the preceding claims, **characterized in that** the woven textile fabric is woven in a plain weave.

5. Woven textile fabric according to one of the preceding claims, **characterized in that** the woven textile fabric has 25 to 40 warp threads per centimetre.

6. Woven textile fabric according to one of the preceding claims, **characterized in that** the thread that is configured as the monofilament has an elongation at break of more than 45%.

7. Woven textile fabric according to one of the preceding claims, **characterized in that** the thread that is configured as the multifilament has 130 to 160 filaments.

8. Woven textile fabric according to one of the preceding claims, **characterized in that** the woven textile fabric has 10 to 15 weft threads per centimetre.

9. Seat cover comprising a woven textile fabric according to one of the preceding claims.

10. Vehicle seat which has a seat cover according to Claim 9.

## Revendications

1. Tissu textile pour l'habillage extérieur de sièges de véhicules, comprenant un fil de trame et un fil de chaîne, l'un des fils comprenant un polyester réalisé sous forme de polyfilament texturé par jet d'air et l'autre fil étant réalisé sous forme de monofilament à base de polyester, **caractérisé en ce que** le fil réalisé sous forme de monofilament présente une proportion de polyester d'au moins 70 % et d'au maximum 100 % ainsi qu'un diamètre de l'ordre de 0,1 à 0,24 mm.

2. Tissu textile selon la revendication 1, **caractérisé en ce que** le fil réalisé sous forme de monofilament présente un diamètre de l'ordre de 0,14 à 0,2 mm, en particulier de 0,16 à 0,18 mm.

3. Tissu textile selon l'une quelconque des revendications précédentes, **caractérisé en ce que** le fil réalisé sous forme de multifilament est le fil de trame.

4. Tissu textile selon l'une quelconque des revendications précédentes, **caractérisé en ce que** le tissu textile est tissé dans une armure toile.

5. Tissu textile selon l'une quelconque des revendications précédentes, **caractérisé en ce que** le tissu textile présente 25 à 40 fils de chaîne par centimètre.

6. Tissu textile selon l'une quelconque des revendications précédentes, **caractérisé en ce que** le fil réalisé sous forme de monofilament présente un étirement à la rupture de plus de 45 %.

7. Tissu textile selon l'une quelconque des revendications précédentes, **caractérisé en ce que** le fil réalisé sous forme de multifilament présente 130 à 160 filaments.

8. Tissu textile selon l'une quelconque des revendications précédentes, **caractérisé en ce que** le tissu textile présente 10 à 15 fils de trame par centimètre.

9. Revêtement de siège, comprenant un tissu textile selon l'une quelconque des revendications précédentes.

10. Siège de véhicule qui présente un revêtement de siège selon la revendication 9.
